# EUROPEAN PATENT APPLICATION

(11) **EP 4 779 782 A1**
(43) Date of publication of application: **22.07.2026**
(21) Application number: 25216587.3
(22) Date of filing: 18.11.2025
(51) Int. Cl.: H01M 50/342, H01M 50/152, H01M 50/107, H01M 50/148

(54) **SECONDARY BATTERY**

(30) Priority: 15.01.2025 KR 20250005871
(71) Applicant: SAMSUNG SDI CO., LTD., Yongin-si, Gyeonggi-do 17084 (KR)
(72) Inventor: KIM, Dae Kyu, 17084 Yongin-si (KR); SEO, Kwang Soo, 17084 Yongin-si (KR); PARK, Jong Jun, 17084 Yongin-si (KR)
(74) Representative: Marks & Clerk LLP

(57) **Abstract**

A secondary battery including a case, an electrode assembly housed in the case, and a cap assembly sealing the case. The cap assembly includes a cap down above the electrode assembly and a safety vent above the cap down. The safety vent includes a first notching region. The cap down includes a second notching region. Sizes of the first notching region and the second notching region are different.

## Description

### BACKGROUND

### 1. Field

Embodiments of the present disclosure relate to a secondary battery and, more specifically, a secondary battery having one or more notching regions.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not form the prior art.

### SUMMARY

Embodiments provide a secondary battery in which a safety vent breaks at a set pressure.

The secondary battery according to some embodiments may include a case, an electrode assembly housed in the case, and a cap assembly sealing the case. The cap assembly may include a cap down above the electrode assembly and a safety vent above the cap down. The safety vent may include a first notching region. The cap down may include a second notching region. Sizes of the first notching region and the second notching region may be different.

In some embodiments, the safety vent may include a first protrusion part that may be convex downward. The cap down may include a second protrusion part that may be convex upward. The first protrusion part and the second protrusion part may be coupled. The first notching region may be at the first protrusion part. The second notching region may be at the second protrusion part.

In some embodiments, the second notching region may be smaller than the first notching region.

In some embodiments, the second notching region may be smaller than a width of the first notching region.

In some embodiments, the second notching region may have a long width of from about 0.05 mm to about 0.1 mm, a short width of from about 0.01 mm to about 0.05 mm, and a depth of from about 0.06 mm to about 0.13 mm.

In some embodiments, a shape of the first notching region may be different than a shape of the second notching region.

In some embodiments, the first notching region may include a first bottom surface, a first-first inner side surface connected to the first bottom surface, and a first-second inner side surface connected to the first bottom surface. The second notching region may include a second bottom surface, a second-first inner side surface connected to the second bottom surface, and a second-second inner side surface connected to the second bottom surface. The first-first inner side surface and the first-second inner side surface may be inclined at a first angle. At least one of the second-first inner side surface and the second-second inner side surface may be inclined at a second angle smaller than the first angle.

In some embodiments, the first-first inner side surface and the first-second inner side surface may be inclined at a same angle.

In some embodiments, the second-first inner side surface and the second-second inner side surface may be inclined at the second angle.

In some embodiments, the second-first inner side surface may be inclined at the first angle. The second-second inner side surface may be inclined at the second angle.

In some embodiments, the secondary battery as claimed in claim 8, wherein the second-first inner side surface may be inclined at the first angle. The second-second inner side surface may be not inclined.

In some embodiments, the safety vent may include a first notching part formed in the first notching region. The cap down may include a second notching part formed in the second notching region. A size of the second notching part may be smaller than a size of the first notching part.

In some embodiments, a thickness of the first notching part may be smaller than a thickness of other parts in the first notching region and a thickness of the second notching part may be smaller than a thickness of other parts in the second notching region.

In some embodiments, a first current collecting plate above the electrode assembly; and a second current collecting plate below the electrode assembly.

In some embodiments, the cap down may include aluminum or an aluminum alloy.

In some embodiments, the cap assembly further may include a cap up above the safety vent.

In some embodiments, a number of first notching regions and a number of second notching regions may be the same.

In some embodiments, the safety vent may include one or two first notching regions. The cap down may include one second notching region.

In some embodiments, the first notching region may be formed as a ring shape.

In some embodiments, one end of the first notching region and another end of the first notching region may be spaced apart.

At least some of the above and other features of the invention are set out in the claims.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of example embodiments that follows, and the disclosure is not to be construed as limited to what is shown in such drawings. In the drawings:
FIG. 1 is a perspective view showing a secondary battery according to some embodiments of the present disclosure.
FIG. 2 is a cross-sectional view showing region A-A' of Fig. 1 according to some embodiments of the present disclosure.
FIGS. 3 and 4 are views of an extension of a cap down of a secondary battery according to some embodiments of the present disclosure.
FIG. 5 is a cross-sectional view of a cap assembly of a secondary battery according to some embodiments of the present disclosure.
FIGS. 6 to 8 are views of an extension of a cap down of a secondary battery according to some embodiments of the present disclosure.
FIG. 9 is a graph explaining the break of the cap down according to an embodiment and a comparative example.
FIG. 10 is a perspective view of a battery module including secondary batteries according to some embodiments of the present disclosure.
FIGS. 11 and 12 are perspective views of a battery pack including battery modules according to some embodiments of the present disclosure.
FIGS. 13 and 14 are perspective views and a side view of a vehicle including battery packs according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the following description, a width direction (diameter direction) of the case is defined as an X direction, and a height direction of the case is defined as a Y direction.

Hereinafter, secondary batteries 1000 according to embodiments will be described with reference to the drawings.

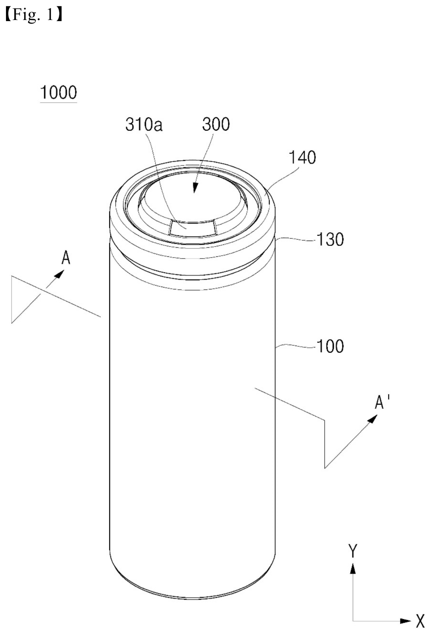

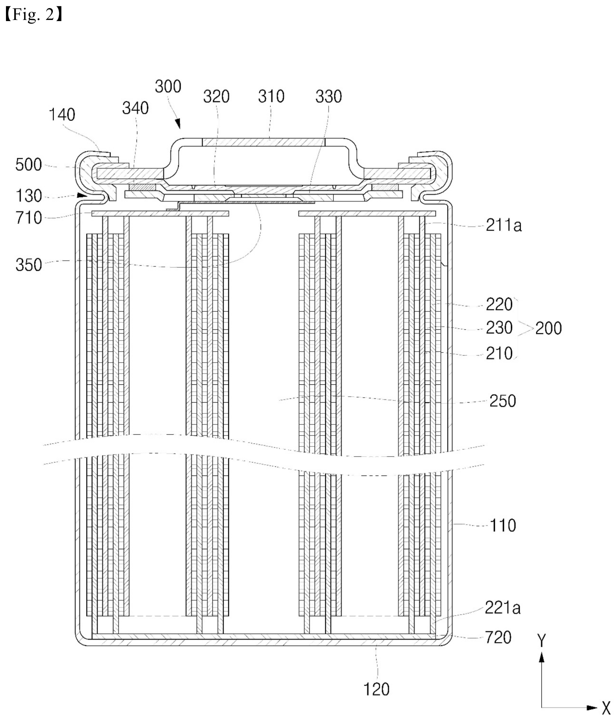

FIG. 1 is a perspective view showing a secondary battery 1000 according to some embodiments of the present disclosure. FIG. 2 is a cross-sectional view showing region A-A' of Fig. 1 according to some embodiments of the present disclosure.

Referring to FIGS. 1 and 2, the secondary battery 1000 may include a case 100, an electrode assembly 200, a lead tab 350, a cap assembly 300, an insulating gasket 500, and current collecting plates 710, 720.

The case 100 forms the overall appearance of the secondary battery 1000. The case 100 may include a conductive metal such as aluminum, an aluminum alloy, or nickel-plated steel, and the case 100 may provide a space in which the electrode assembly 200 is housed. The case 100 may include an accommodation part, and the electrode assembly 200 may be housed in the accommodation part.

The case 100 may be formed in various shapes. For example, the case 100 can be formed in a cylindrical, prismatic, or pouch shape. However, other embodiments are not limited thereto. Hereinafter, for convenience of explanation, the case 100 is formed in a cylindrical shape.

The electrode assembly 200 may include a first electrode 210, a second electrode 220, and a separator 230. The separator 230 may be disposed between the first electrode 210 and the second electrode 220. The first electrode 210, the second electrode 220, and the separator 230 may be wound in a jelly-roll shape. The electrode assembly 200 may be disposed in the accommodation part of the case 100.

The first electrode 210 includes a first substrate and a first active material layer on the first substrate. The first substrate includes one surface and another surface opposite to the one surface. The first active material layer may be disposed on at least one of the one surface and the another surface of the first substrate. The first substrate may include a first uncoated portion 211a. The first active material layer is not disposed on the first uncoated portion 211a. Further, the first uncoated portion 211a may be defined as a region in which the first active material layer is not disposed.

The second electrode 220 includes a second substrate and a second active material layer on the second substrate. The second substrate includes one surface and another surface opposite to the one surface. The second active material layer may be disposed on at least one of the one surface and the another surface of the second substrate. The second substrate may include a second uncoated portion 221a. The second active material layer is not disposed on the second uncoated portion 221a. In some embodiments, the second uncoated portion 221a may be defined as a region in which the second active material layer is not disposed.

The first electrode 210 may be a positive electrode. For example, the first substrate may include aluminum, and the first active material layer may include a transition metal oxide. The second electrode 220 may be a negative electrode. For example, the second substrate may include copper or nickel, and the second active material layer may include graphite.

The separator 230 may prevent a short circuit between the first electrode 210 and the second electrode 220 while allowing the movement of lithium ions. For example, the separator 230 may include a polyethylene film, a polypropylene film, or a polyethylene-polypropylene film.

The case 100 may accommodate the electrode assembly 200 and the electrolyte, and the case 100 may form the appearance of the secondary battery 1000 together with the cap assembly 300. The case 100 may include a body part 110 that is cylindrical and a bottom part 120 connected to one side of the body part 110. A beading part 130 deformed toward the inside of the body part 110 may be positioned on the body part 110, and a crimping part 140 bent toward the inside of the body part 110 may be positioned at the end of the opening of the body part 110.

The beading part 130 may prevent the electrode assembly 200 from moving in the case 100, and the insulating gasket 500 and the cap assembly 300 may be easily supported by the beading part 130. The crimping part 140 may press the edge of the cap assembly 300 through the insulating gasket 500. Accordingly, the cap assembly 300 may be fixed.

The cap assembly 300 may be fixed to the inside of the crimping part 140 through the insulating gasket 500. Accordingly, the case 100 may be sealed. The cap assembly 300 may include a cap up 310, a safety vent 320, a cap down 330, and an insulator 340.

The cap up 310 may be disposed at the uppermost portion of the cap assembly 300. The cap up 310 may include a terminal part for connecting to an external circuit, and the cap up 310 may include a discharge part 310a for discharging gas around the terminal part. For example, the cap up 310 may be convex upward. However, the embodiment is not limited thereto, and the cap up 310 may be formed in various shapes. In some embodiments, the cap up 310 may be omitted. When the cap assembly 300 does not include the cap up 310, the safety vent 320 may simultaneously function as a current interrupting device CID and a cap up.

The safety vent 320 may be disposed under the cap up 310. The safety vent 320 may include a first protrusion part that protrudes downwardly and is connected to the cap down 330, and at least one first notching region 320a located around the first protrusion part.

The cap down 330 may be disposed under the safety vent 320. The cap down 330 may include an opening that can discharge gas. The cap down 330 may include a second protrusion part that protrudes upwardly. The first protrusion part and the second protrusion part are electrically connected. The cap down 330 may include at least one second notching region 330a. The second notching region 330a is formed on the second protrusion part.

The cap up 310, the safety vent 320, and the cap down 330 may include a same metal or a similar metal. Further, the cap up 310, the safety vent 320, and the cap down 330 may include aluminum or an aluminum alloy.

The insulator 340 may be disposed between the safety vent 320 and the cap down 330 to insulate the safety vent 320 and the cap down 330.

The secondary battery 1000 may generate gas due to overcharging or abnormal operation. The first protrusion part is deformed upward by pressure. Accordingly, the second protrusion part connected to the first protrusion part is also deformed upward. Accordingly, the first electrode 210 is short-circuited as the second notching region 330a is broken. Next, when the first notching region 320a is broken, the gas is discharged outside the case 100. Accordingly, an explosion of the secondary battery 1000 may be prevented.

The first electrode 210 and the second electrode 220 generate lithium ions by an electrochemical reaction. The electrolyte may allow lithium ions to move. The electrolyte may be a non-aqueous organic electrolyte that is a mixture of a lithium salt and a high-purity organic solvent, or the electrolyte may be a polymer using a polymer electrolyte or a solid electrolyte.

The electrode assembly 200 may include a core part 250. The core part 250 is a hollow part formed at the center of the electrode assembly 200. Further, the electrode assembly 200 may be wound in one direction. Accordingly, the core part 250 may be formed at the center of the electrode assembly 200. When the electrolyte is injected, the electrolyte may be easily injected by the core part 250, and when gas or heat is generated in the secondary battery 1000, the gas or heat may easily move to the outside of the secondary battery 1000 through the core part 250. The separator 230 may be disposed on an inner surface of the core part 250.

The current collecting plate is disposed at the upper and lower portions of the electrode assembly 200. The current collecting plate may include a first current collecting plate 710 and a second current collecting plate 720. The first current collecting plate 710 may be disposed on the upper portion of the electrode assembly 200. Further, the first current collecting plate 710 may be disposed between the electrode assembly 200 and the cap assembly 300. The second current collecting plate 720 may be disposed on the lower portion of the electrode assembly 200. Further, the second current collecting plate 720 may be disposed between the electrode assembly 200 and the bottom part 120 of the case 100.

The area of the first current collecting plate 710 may be less than or equal to the area of the upper surface of the electrode assembly 200, and the area of the second current collecting plate 720 may be less than or equal to the area of the lower surface of the electrode assembly 200.

The first current collecting plate 710 is connected to the first electrode 210. Particularly, the first current collecting plate 710 is electrically connected to the first uncoated portion 211a. In some embodiments, the first current collecting plate 710 and the first uncoated portion 211a may be coupled by welding, or a lead tab 350 may be coupled to the first uncoated portion 211a. The first current collecting plate 710 and the first uncoated portion 211a may be electrically connected by the lead tab 350. The first current collecting plate 710 may be connected to the cap assembly 300. The lead tab 350 may be disposed between the first current collecting plate 710 and the cap assembly 300. One end of the lead tab 350 and the first current collecting plate 710 may be coupled by welding. The other end of the lead tab 350 and the cap down 330 may be coupled by welding. Accordingly, the first current collecting plate 710 and the cap assembly 300 may be electrically connected by the lead tab 350. Accordingly, the first current collecting plate 710 may allow current flow between the first electrode 210 and the cap assembly 300. Accordingly, when the first electrode 210 is a positive electrode, the terminal portion of the cap assembly 300 may be a positive electrode.

The second current collecting plate 720 is connected to the second electrode 220. Further, the second current collecting plate 720 may be electrically connected to the second uncoated portion 221a. In some embodiments, the second current collecting plate 720 and the second uncoated portion 221a may be coupled by welding, or a lead tab may be coupled to the second uncoated portion 221a. The second current collecting plate 720 and the second uncoated portion 221a may be electrically connected by the lead tab, and the second current collecting plate 720 is connected to the bottom part 120 of the case 100. In some embodiments, the second current collecting plate 720 and the bottom part 120 of the case 100 may be coupled by welding. Accordingly, the second current collecting plate 720 may be a passage for current flow between the second electrode 220 and the case 100. Accordingly, when the second electrode 220 is a negative electrode, the case 100 may be a negative electrode.

The first current collecting plate 710 may include at least one hole. The electrolyte may move into the interior of the electrode assembly 200 through the hole.

In some embodiments, the secondary battery 1000 may not include the first current collecting plate 710 and the second current collecting plate 720. Further, the first electrode 210 may include a first electrode tab, and the second electrode 220 may include a second electrode tab. The first electrode tab may be coupled with the cap down 330. The second electrode tab may be coupled with the bottom part 120 of the case 100.

As described above, gas may be generated in the case. Further, when the secondary battery is exposed to high temperature, the electrolyte may be vaporized. Particularly, gas may be generated in the case, and the temperature and pressure in the case may increase due to the gas.

The separator may be contracted due to high temperature. Accordingly, the first electrode and the second electrode may contact and be short-circuited. Even further, the secondary battery may explode.

To prevent an explosion of the secondary battery, the first notching region 320a may be broken at a set pressure to discharge internal gas.

The cap down 330 includes a metal. Further, the cap down 330 may be elongated at a high temperature.

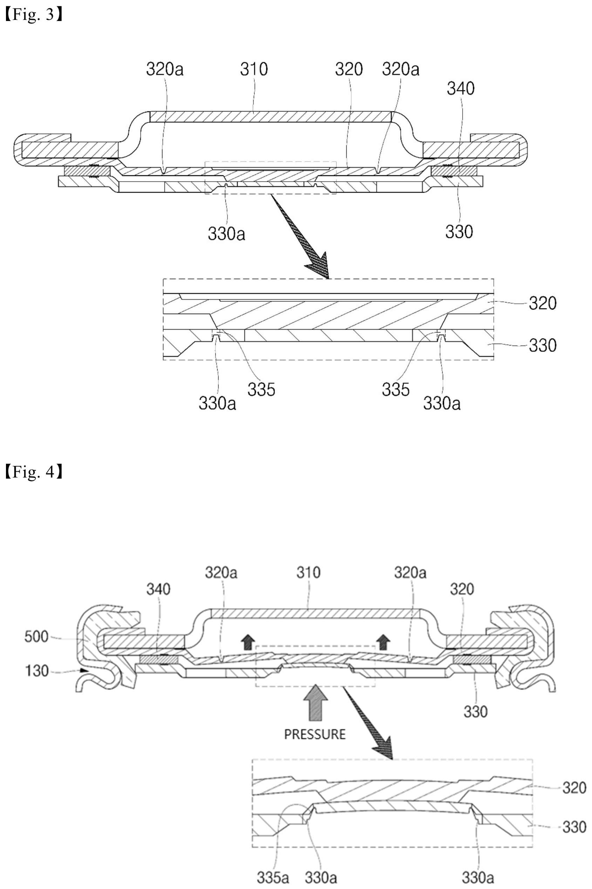

FIGS. 3 and 4 are views of an extension of a cap down 330 of a secondary battery 1000 according to some embodiments of the present disclosure.

Referring to FIGS. 3 and 4, the first protrusion part is deformed upward at the set pressure. Accordingly, the second protrusion part connected to the first protrusion part also moves upward. Accordingly, the second notching region 330a is broken. The cap down 330 includes a notching part 335. The notching part 335 is formed in the second notching region 330a. Accordingly, the thickness of the notching part 335 is smaller than that of other regions in the cap down 330.

When the second notching region 330a is broken, the notching part 335 may be elongated to form an elongated part 335a. Accordingly, the breakage of the first notching region 320a of the safety vent 320 may be delayed. In some embodiments, first notching region 320a is formed to be broken at a set first pressure. However, in prior configurations of secondary batteries, the first notching region may not be broken at the first pressure by the elongated part but may be broken at a second pressure higher than the first pressure. Accordingly, the discharge of the gas may be delayed, and the secondary battery may explode.

In order to solve the above problem, some embodiments may include the second notched region having a set size or shape.

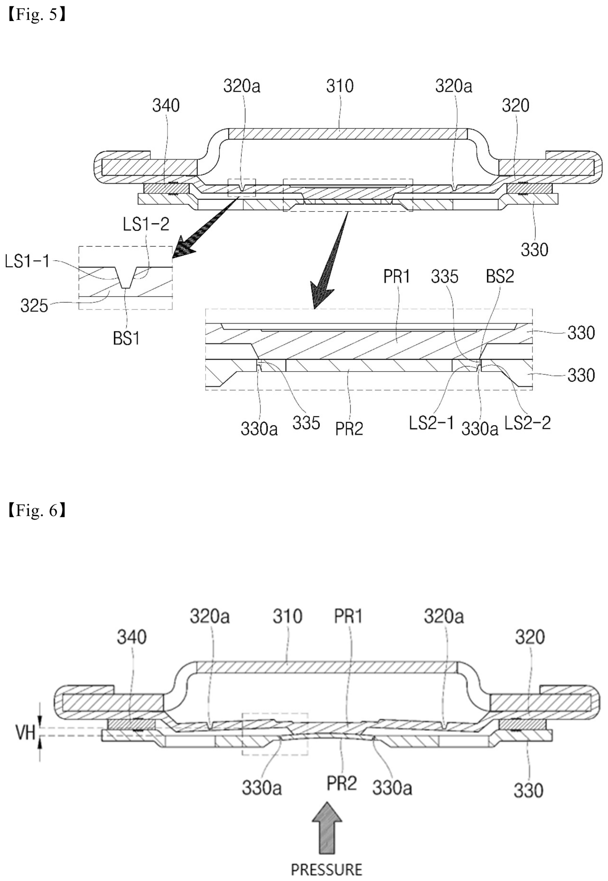

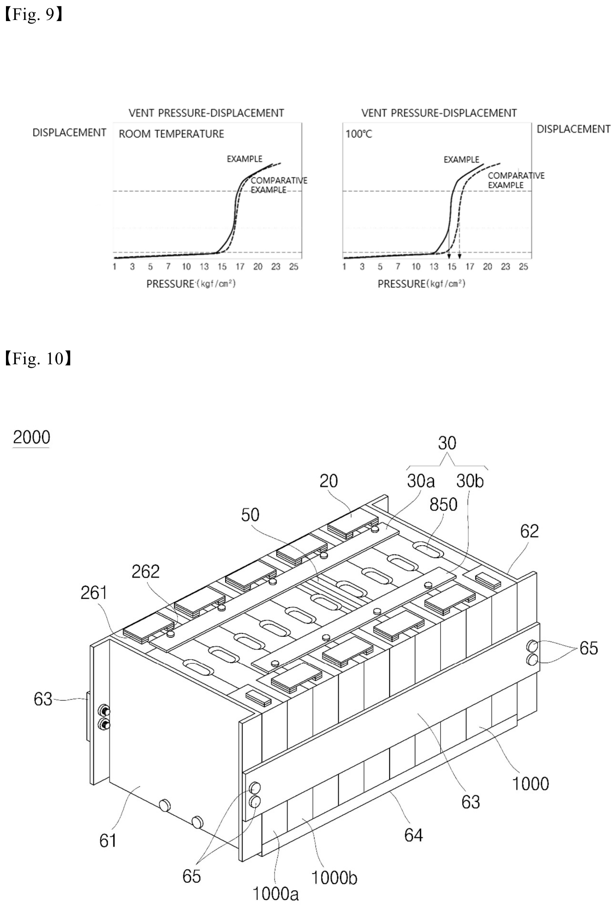

FIG. 5 is a cross-sectional view of a cap assembly of a secondary battery according to some embodiments of the present disclosure. FIGS. 6 to 8 are views of an extension of a cap down of a secondary battery according to some embodiments of the present disclosure. FIG. 9 is a graph illustrating a pressure at which a cap down may break according to some embodiments of the present disclosure.

Referring to FIGS. 5 to 9, the safety vent 320 includes a first protrusion part PR1, and the safety vent 320 includes a first notching region 320a. The first notching region 320a is disposed on the outside of the first protrusion part PR1. The first notching region 320a extends along the outer diameter direction of the safety vent 320. The first notching region 320a may be formed in a ring shape in which one end and another end meet, or the one end and the another end of the first notching region 320a may be spaced apart from each other.

The safety vent 320 may include at least one first notching region 320a. For example, the safety vent 320 may include one first notching region 320a, or the safety vent 320 may include two first notching regions 320a spaced apart from each other.

The cap down 330 includes a second protrusion part PR2. The second protrusion part PR2 is coupled with the first protrusion part PR1, and the cap down 330 includes a second notching region 330a. The second notching region 330a is formed in the second protrusion part PR2. The number of the first notching region 320a and the number of the second notching region 330a may be the same or different. The cap down 330 may include one second notching region 330a. When the safety vent 320 includes one first notching region 320a, the number of the first notching region 320a and the number of the second notching region 330a may be the same, or when the safety vent 320 includes two first notching regions 320a, the number of the first notching region 320a and the number of the second notching region 330a may be different. The first notching region 320a and the second notching region 330a may have different shapes. The first notching region 320a may include a first bottom surface BS1, and a first inner side surfaces may be connected to the first bottom surface BS1. The first inner side surface may include a first-first inner side surface LS1-1 and a first-second inner side surface LS1-2. The first-first inner side surface LS1-1 and the first-second inner side surface LS1-2 may be connected to the first bottom surface BS1. The first-first inner side surface LS1-1 and the first-second inner side surface LS1-2 may be formed integrally with the first bottom surface BS1.

The first-first inner side surface LS1-1 and the first-second inner side surface LS1-2 may be inclined with respect to the thickness direction of the safety vent 320. Hence, the first-first inner side surface LS1-1 and the first-second inner side surface LS1-2 may be inclined surfaces. In some embodiments, the first-first inner side surface LS1-1 and the first-second inner side surface LS1-2 may be inclined at the same or similar angles. In some embodiments, the first-first inner side surface LS1-1 and the first-second inner side surface LS1-2 may be inclined at the first angle. The first-first inner side surface LS1-1 and the first-second inner side surface LS1-2 may be inclined so that a width of the first notching region 320a becomes smaller as it goes in a depth direction.

The second notching region 330a may include a second bottom surface BS2, and the second inner side surfaces may be connected to the second bottom surface BS2. The second inner side surface may include the second-first inner side surface LS2-1 and the second-second inner side surface LS2-2. The second-first inner side surface LS2-1 and the second-second inner side surface LS2-2 may be connected to the second bottom surface BS2. The second-first inner side surface LS2-1 and the second-second inner side surface LS2-2 may be formed integrally with the second bottom surface BS2.

At least one of the second-first inner side surface LS2-1 and the second-second inner side surface LS2-2 may be inclined with respect to the thickness direction of the cap down 330. In some embodiments, the second-first inner side surface LS2-1 and the second-second inner side surface LS2-2 may be inclined (or may be an inclined surface).

The second-first inner side surface LS2-1 and the second-second inner side surface LS2-2 may be inclined at the same or similar angle. For example, the second-first inner side surface LS2-1 and the second-second inner side surface LS2-2 may be inclined at a second angle. The second angle may be smaller than the first angle. The second-first inner side surface LS2-1 and the second-second inner side surface LS2-2 may be inclined so that a width of the second notching region 330a becomes smaller as it goes in a depth direction.

In some embodiments, the second-first inner side surface LS2-1 and the second-second inner side surface LS2-2 may be inclined at different angles. For example, the second-first inner side surface LS2-1 may be inclined at the first angle (i.e., in some embodiments, the second-first inner side surface LS2-1 may be inclined at a similar angle to the first-first inner side surface LS1-1 and the first-second inner side surface LS 1-2), and the second-second inner side surface LS2-2 may be inclined at a second angle (i.e., the inclination angle of the second-second inner side surface LS2-2 may be smaller than the inclination angle of the second-first inner side surface LS2-1).

In some embodiments, either the second-first inner side surface LS2-1 or the second-second inner side surface LS2-2 may be inclined. For example, the second-first inner side surface LS2-1 may be inclined. Particularly, the second-first inner side surface LS2-1 may be inclined at the first angle or the second angle, and the second-second inner side surface LS2-2 may not be inclined. Further, the second-second inner side surface LS2-2 may be parallel or nearly parallel to the thickness direction of the cap down 330.

The safety vent 320 may include a first notching part 325 formed in the first notching region 320a, and the cap down 330 may include a second notching part 335 formed in the second notching region 330a. Accordingly, the sizes of the first notching part 325 of the safety vent 320 and the second notching part 335 of the cap down 330 may be different. Further, the inclination angle of the second notching region 330a is formed to be smaller than the inclination angle of the first notching region 320a. Accordingly, a size of the second notching part 335 may be smaller than a size of the first notching part 325.

The first notching region 320a and the second notching region 330a may have different sizes. In some embodiments, a size of the second notching region 330a may be smaller than a size of the first notching region 320a.

The long width of the second notching region 330a may be smaller than the long width of the first notching region 320a, and the short width of the second notching region 330a may be smaller than the short width of the first notching region 320s, and the depth of the second notching region 330a may be smaller than the depth of the first notching region 320a.

The first notching region 320a may have the long width of from about 0.15 mm to about 0.25 mm, the short width of from about 0.05 mm to about 0.15 mm, and the depth of from about 0.1 mm to about 0.3 mm, and the second notching region 330a may have the long width of from about 0.05 mm to about 0.1 mm, the short width of from about 0.01 mm to about 0.05 mm, and the depth of from about 0.06 mm to about 0.13 mm. Accordingly, the area or volume of the second notching region 330a may be smaller than that of the first notching region 320a.

Accordingly, the sizes of the first notching part 325 and the second notching part 335 may be different. In some embodiments, a size of the second notching region 330a is formed smaller than a size of the first notching region 320a. Hence, a size of the second notching part 335 may be smaller than a size of the first notching part 325.

Referring to FIGS. 6 to 8, the first notching region 320a and the second notching region 330a may be broken by pressure.

Referring to FIG. 6, the pressure in the case 100 is transmitted toward the cap assembly 300. The safety vent 320 is deformed by the pressure. In some embodiments, the first protrusion part PR1 moves upward. Accordingly, the second protrusion part PR2 coupled with the first protrusion part PR1 also moves upward.

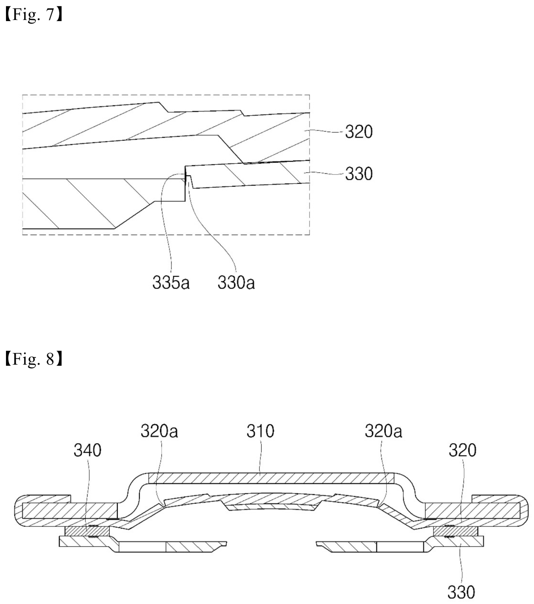

The second notching region 330a may be broken by pressure. Referring to Fig. 7, when the second notching region 330a is broken, the second notching part 335 is elongated. The second notching part 335 is elongated by high temperature. Accordingly, an elongated part 335a is formed in the region where the second notching region 330a is broken. Referring to Fig. 8, the elongated part 335a is separated from the second protrusion part PR2 by the pressure, and the first notching region 320a is broken. Accordingly, the gas in the case 100 is discharged to the outside.

The second notching region 330a has a set shape or size. Accordingly, the size of the second notching part 335 is reduced. Therefore, when the second notching region 330a is broken, the length of the elongated part 335a formed by the second notching part 335 is shortened. Accordingly, a delay in a breaking of the first notching region 32a may be prevented by the elongation part 335a.

Accordingly, the second notching region 330a may be broken at the set first pressure, and the first electrode 210 and the cap assembly 300 may be short-circuited at the set first pressure. Therefore, the short-circuiting of the first electrode 210 and the second electrode 220 may be prevented, thereby preventing an explosion of the electrode assembly 200. Therefore, the secondary battery 1000, in some embodiments, may have improved safety.

Meanwhile, the first notching part 325 of the safety vent 320 is largely formed by the first notching region 320a. Therefore, the first notching part 325 is easily broken by the first notching region 320a, and even if an elongated part is formed in the first notching part 325 by the breakage of the first notching region 320a, the gas is easily discharged through a breakage region. Hence, in some embodiments, the purpose of a break of the safety vent 320 is a discharge of gas, not a short-circuiting of the electrodes 210,220. Therefore, when the safety vent 320 is broken, even if the elongated part 335a is large, a performance of the secondary battery 1000 is not affected.

Fig. 9 is a graph shows a displacement of the safety vent 320 according to examples of some embodiments and comparative example. The displacement of the safety vent (or Vent pressure-displacement) is a distance by which the position of the safety vent 320 changes due to pressure. That is, the displacement of the safety vent 320 is defined as the distance VH by which the safety vent 320 moves due to pressure (see, i.e., Fig. 6).

The graph of Fig. 9 relates to an example of embodiments of the secondary battery 1000 (i.e., "Example") including the second notching region 330a (described above) compared to another secondary battery (i.e., "Comparative Example") of which the shape or size of the first notching region and the second notching region are the same.

Referring to Fig. 9, elongation of the notching part does not occur at room temperature. Therefore, the Example and the Comparative Example have similar displacements at the same pressure.

On the other hand, displacements of the Example and the Comparative Example are different at a high temperature of about 100°C. Particularly, Example and the Comparative Example have different displacements at the same pressure. Even more particularly, the Example has a larger displacement than Comparative Example. That is, in the Example, elongation of the second notching part 335 is reduced when the second notching region 330a is broken. Hence, in some embodiments, the length of the extension portion 335a is shortened. Accordingly, the first notching region 320a may be broken at a set first pressure.

The secondary battery 1000 according to an embodiment of the Example includes the cap down 330 and the safety vent 320. The cap down 330 is electrically connected to the first electrode 210.

The safety vent 320 includes the first notching region 320a, and the cap down 330 includes the second notching region 330a. The safety vent 320 includes the first notching part 325 formed by the first notching region 320a. The cap down 330 includes a second notching part 335 formed by the second notching region 330a.

The first notching region 320a and the second notching region 330a have different sizes, or the first notching region 320a and the second notching region 330a have different shapes. Therefore, sizes of the first notching part 325 and the second notching part 335 are different. In some embodiments, a size of the second notching part 335 is smaller than a size of the first notching part 325.

Therefore, when the second notching region 330a of the cap down 330 is broken, the elongation by the second notching part 335 may be reduced. Accordingly, when an event of the secondary battery 1000 occurs, the first electrode 210 may be short-circuited quickly, and, when the event of the secondary battery 1000 occurs, the first notching region 320a of the safety vent 320 may be broken at a set pressure.

Accordingly, the secondary battery 1000 according to embodiments of the present disclosure may have improved safety.

In some embodiments of the present disclosure, the secondary battery 1000 may be used in portable small electronic devices such as smartphones, feature phones, notebook computers, digital cameras, and camcorders, and a battery module and a battery pack including a plurality of secondary batteries 1000 may be used as a power source for driving a motor of a hybrid vehicle or an electric vehicle and as a battery for storing power.

FIG. 10 is a perspective view of a battery module 2000 including secondary batteries 1000 according to some embodiments of the present disclosure.

Referring to FIG. 10, the battery module 2000 according to one or more example embodiments of the present disclosure includes terminal parts, a plurality of secondary battery 1000 arranged in one direction, a connection tab 20 connecting a secondary battery 1000a to an adjacent secondary battery 1000b, and a protection circuit module 30 having one end connected to the connection tab 20. The protection circuit module 30 may include a battery management system (BMS). Further, the connection tab 20 may include a body portion in contact with the terminal parts between the adjacent secondary battery 1000a and 1000b and an extension portion extending from the body portion and connected to the protection circuit module 30. The connection tab 20 may be, for example, a bus bar.

Each secondary battery 1000 may include a battery case, an electrode assembly received (or accommodated) in the battery case, and an electrolyte. The electrode assembly and the electrolyte react electrochemically to store and release (e.g., generate) energy. Terminal parts electrically connected to the connection tab 20 and a vent 850 as a discharge passage for gas generated inside the battery case may be provided on one side of (e.g., an upper side of) the secondary battery 1000. The terminal parts of the secondary battery 1000 may be a positive electrode terminal 261 and a negative electrode terminal 262 having different polarities from each other, and the terminal parts of the adjacent secondary battery 1000a and 1000b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of secondary battery is not limited to the structure shown in FIG. 10 and may be changed as desired or necessary.

The plurality of secondary batteries 1000 may be arranged in (e.g., may be stacked in) one direction so that the wide surfaces of the secondary batteries 1000 face each other, and the plurality of secondary batteries 1000 may be fixed by housings. The housings may include a pair of end plates 61 and 62 facing the wide surfaces of the secondary battery batteries 1000 and a side plate 63 and a bottom plate 64 connecting the pair of end plates 61 and 62 to each other. The side plate 63 may support side surfaces of the secondary batteries 1000, and the bottom plate 64 may support bottom surfaces of the secondary batteries 1000. In addition, the pair of end plates 61 and 62, the side plate 63 and the bottom plate 64 may be connected by bolts 65 and/or any other suitable fastener and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of secondary batteries 1000 are arranged in different locations. The first protection circuit module 30a and the second protection circuit module 30b may be spaced from each other at a suitable or desired interval (e.g., a predetermined interval) and arranged parallel to each other to be electrically connected to adjacent connection tabs 20, respectively. For example, the first protection circuit module 30a extends on one side of the upper portion of the plurality of secondary batteries 1000 along the direction in which the plurality of secondary batteries 1000 are arranged, and the second protection circuit module 30b extends to the other upper side of the plurality of secondary batteries 1000 along the direction in which the plurality of secondary batteries 1000 are arranged. The second protection circuit module 30b may be spaced from the first protection circuit module 30a at a suitable or desired interval (e.g., a predetermined interval) with the vents 34 interposed therebetween but may be disposed parallel to the first protection circuit module 30a. As such, the two protection circuit modules are spaced from each other side-by-side along the direction in which the plurality of secondary batteries 1000 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a connector 50. One side of the connector 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connector 50 may be or include, for example, an electric wire. In addition, the connector 50 may be made of or include a material having elasticity or flexibility. By the connector 50, it may be possible to check and manage whether the voltage, temperature, and/or current of the plurality of secondary battery 1000 are normal or within a desired range. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connector 50.

In addition, when a secondary battery 1000 swells, shocks may be absorbed by the elasticity or flexibility of the connector 50, thereby hindering or preventing the first and second protection circuit modules 30a and 30b from being damaged.

In addition, the shape and structure of the connector 50 is not limited to the shape and structure shown in FIG. 10.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work when an abnormality is detected in the battery module.

The secondary battery and battery modules according to the previously described example embodiments may be used to manufacture the battery pack.

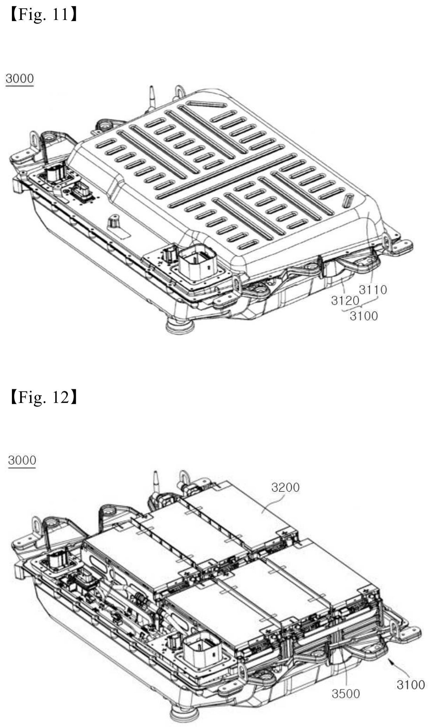

FIGS. 11 and 12 are perspective views showing a battery pack 3000 including battery modules 2000 according to some embodiments of the present disclosure.

FIGS. 11 and 12 show a battery pack 3000 according to one or more example embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar 3500, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of secondary battery are omitted. In one or more example embodiments, battery pack 3300 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

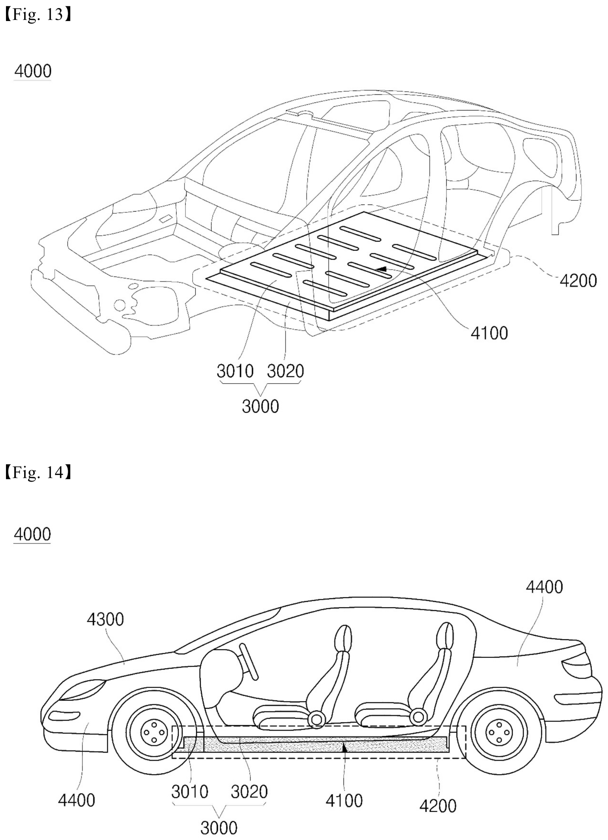

FIGS. 13 and 14 are perspective views and a side view showing a vehicle 4000 including battery packs 3000 according to some embodiments of the present disclosure.

In FIG. 13, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrally formed with a vehicle floor 4200. The vehicle underbody 4100 separates the inside and outside of a vehicle, and the pack frame 3020 may be disposed outside the vehicle.

In FIG. 14, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The above description shows only some embodiments for implementing a secondary battery according to the present disclosure. The disclosure is not limited to the above embodiments, and various modifications can be made by anyone having ordinary skill in the art to which the disclosure pertains without departing from the gist of the disclosure.

## Claims

1. A secondary battery comprising:
a case;
an electrode assembly accommodated in the case; and
a cap assembly configured to seal the case,
wherein the cap assembly comprises a cap down above the electrode assembly and a safety vent above the cap down,
wherein the safety vent comprises a first notching region,
wherein the cap down comprises a second notching region, and
wherein sizes of the first notching region and the second notching region are different.

2. The secondary battery as claimed in claim 1, wherein the safety vent comprises a first protrusion part that is convex downward,
wherein the cap down comprises a second protrusion part that is convex upward,
wherein the first protrusion part and the second protrusion part are coupled,
wherein the first notching region is on an outside of the first protrusion part, and
wherein the second notching region is at the second protrusion part.

3. The secondary battery as claimed in claim 1 or 2, wherein a size of the second notching region is smaller than a size of the first notching region.

4. The secondary battery as claimed in claim 3, wherein a width of the second notching region is smaller than a width of the first notching region,
and wherein optionally the second notching region has a long width of from 0.05 mm to 0.1 mm, a short width of from 0.01 mm to a0.05 mm, and a depth of from 0.06 mm to 0.13 mm.

5. The secondary battery as claimed in any preceding claim, wherein a shape of the first notching region is different than a shape of the second notching region.

6. The secondary battery as claimed in claim 5, wherein the first notching region comprises a first bottom surface, a first-first inner side surface connected to the first bottom surface, and a first-second inner side surface connected to the first bottom surface,
wherein the second notching region comprises a second bottom surface, a second-first inner side surface connected to the second bottom surface, and a second-second inner side surface connected to the second bottom surface,
wherein the first-first inner side surface and the first-second inner side surface are inclined at a first angle, and
wherein at least one of the second-first inner side surface and the second-second inner side surface is inclined at a second angle smaller than the first angle.

7. The secondary battery as claimed in claim 6, wherein the first-first inner side surface and the first-second inner side surface are inclined at a same angle,
and wherein optionally one of:
both of the second-first inner side surface and the second-second inner side surface are inclined at the second angle; or
the second-first inner side surface is inclined at the first angle, and the second-second inner side surface is inclined at the second angle; or
the second-first inner side surface is inclined at the first angle, and the second-second inner side surface is not inclined.

8. The secondary battery as claimed in any preceding claim, wherein the safety vent comprises a first notching part formed in the first notching region,
wherein the cap down comprises a second notching part formed in the second notching region, and
wherein a size of the second notching part is smaller than a size of the first notching part,
and wherein optionally a thickness of the first notching part is smaller than a thickness of other parts in the first notching region and a thickness of the second notching part is smaller than a thickness of other parts in the second notching region.

9. The secondary battery as claimed in any preceding claim, further comprising: a first current collecting plate above the electrode assembly; and a second current collecting plate below the electrode assembly.

10. The secondary battery as claimed in any preceding claim, wherein the cap down comprises aluminum or an aluminum alloy.

11. The secondary battery as claimed in any preceding claim, wherein the cap assembly further comprises a cap up above the safety vent.

12. The secondary battery as claimed in any preceding claim, wherein a number of first notching regions and a number of second notching regions is the same.

13. The secondary battery as claimed in any preceding claim, wherein the safety vent comprises only one or only two first notching regions, and
wherein the cap down comprises only one second notching region.

14. The secondary battery as claimed in any preceding claim, wherein the first notching region is formed as a ring shape.

15. The secondary battery as claimed in any preceding claim, wherein one end of the first notching region and another end of the first notching region are spaced apart.
